# EUROPEAN PATENT SPECIFICATION

(11) **EP 4 405 603 B1**
(45) Date of publication and mention of the grant of the patent: **09.12.2026**
(21) Application number: 22870669.3
(22) Date of filing: 15.09.2022
(51) Int. Cl.: F16J 15/324, F16J 15/16, F16J 15/34

(54) **ROTATING SHAFT SEAL HAVING AN EASILY INSTALLED AND EASILY REMOVED INTERNAL COOLING CHANNEL**
DREHWELLENDICHTUNG MIT EINEM EINFACH ZU INSTALLIERENDEN UND ZU ENTFERNENDEN INNEREN KÜHLKANAL
JOINT D'ARBRE TOURNANT DOTÉ D'UN CANAL DE REFROIDISSEMENT INTERNE FACILE À INSTALLER ET À RETIRER

(30) Priority: 20.09.2021 US 202117479535
(43) Date of publication of application: 31.07.2024
(73) Proprietor: Flowserve Pte. Ltd., Singapore 637345 (SG)
(72) Inventor: RYNEARSON, Rodney Wayne, Irving, Texas 75039 (US)
(74) Representative: Petraz, Gilberto Luigi
(86) International application number: PCT/US2022/043610
(87) International publication number: WO 2023/043887

(56) References cited:
- EP-A1- 2 631 419
- WO-A1-2005/026589
- WO-A1-2018/123617
- CN-A- 102 472 393
- FR-A1- 2 607 874
- GB-A- 1 301 309
- US-A- 3 459 430
- US-A- 5 125 792
- US-A1- 2016 265 667
- US-A1- 2021 246 983

## Description

### RELATED APPLICATIONS

This application claims priority of U.S. non-provisional application no. 17/479,535, filed September 20, 2021.

### FIELD OF THE INVENTION

The invention relates to rotating shaft seals, and more particularly, to apparatus and methods for interior cooling of rotating shaft seals.

### BACKGROUND OF THE INVENTION

Pumps, turbines, and other types of rotating shaft apparatus frequently require that a seal be formed between the rotating shaft and the surrounding static housing, so as to prevent leakage into the environment of a lubricant or a process fluid along the rotating shaft. Examples including packing seals, labyrinth seals, contacting face seals, and end face mechanical seals, among others.

Virtually all rotating shaft seals leak, either by design (e.g. end face mechanical seals and labyrinth seals) and/or due to wear (e.g. packing seals, contacting face seals). However, some rotating shaft seal applications require that any leakage into the environment of a contained fluid, referred to herein generically as a "process fluid," must be prevented. One approach to solving this problem is to apply a barrier fluid to the environment-side of the seal at a pressure that is higher than the process fluid pressure, so that any leakage will be of the barrier fluid into the process fluid, and not of the process fluid into the barrier fluid and thence, potentially, into the environment. One approach is to provide a dual seal, wherein two proximal but spaced-apart seals are formed with the rotating shaft, and wherein a "barrier fluid" space between the two seals is filled with the pressurized barrier fluid.

In some cases, elements within a seal can be subject to overheating, for example due to heat transferred from surrounding apparatus, such as a tank or a pump casing; heat transferred from the environment, such as direct sunlight or heated air (for example in a foundry); and/or heat generated by the seal itself, for example due to friction between contacting seal faces or between the rotating shaft and packing, or viscous heating of process fluid between the end faces of an end face mechanical seal. Among other consequences, such heating of the seal can result in damage to elastomers within the seal, breakdown of the fluids circulating within the seal, and/or reduced tribological properties at the seal face interface.

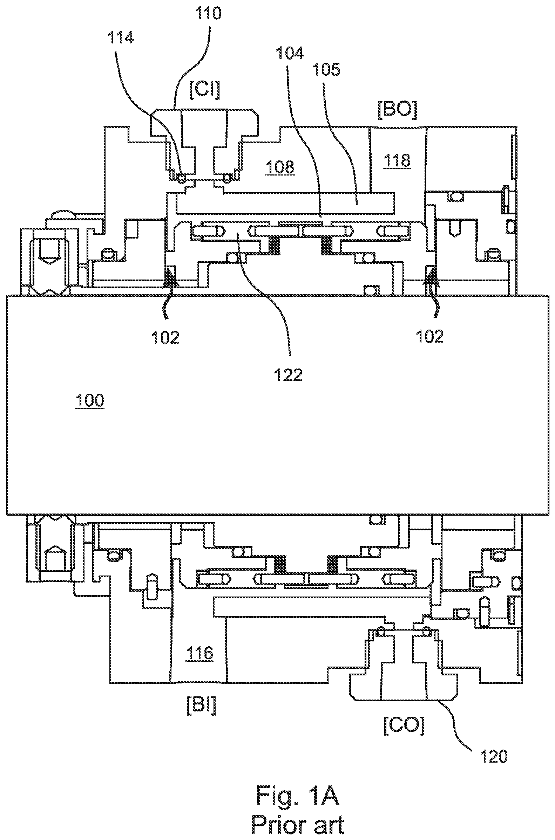

Accordingly, with reference to Fig. 1A, for applications where overheating is a potential problem, rotating shaft seals sometimes include a cooling system, whereby a cooling liquid is caused to flow through a cooling space **105** provided within the seal. The cooling liquid is then caused to pass through a radiator or other cooling mechanism (not shown), before it is recycled through the seal. In the simple case of Fig. 1A, the cooling space **105** is a cooling "jacket" that merely surrounds the region to be cooled, and includes little if any internal structure.

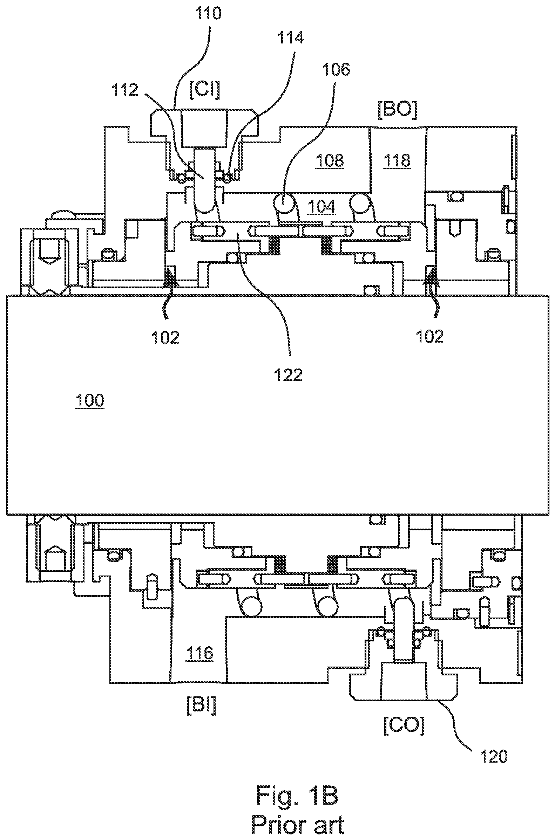

With reference to Fig. 1B, in other approaches where more uniform cooling of the seal is required, a coiled tube **106** is sometimes included as a cooling channel within the seal. The coiled tube **106** provides a directed and controlled flow of the thermal transfer medium within the seal, thereby ensuring that the cooling flow is uniform over an internal volume within the seal.

In the examples of Fig. 1A and 1B, a dual end face mechanical seal assembly surrounds a rotating shaft **100,** and includes a barrier fluid space **104** located between the two sealing areas **102** that is filled with a pressurized barrier fluid which enters the barrier fluid space **104** via port BI **116,** and exits the barrier fluid space **104** via port BO **118.** In lieu of the cooling space 105 of Fig. 1A, the example of Fig. 1B includes a coil of stainless-steel tubing **106** within the barrier fluid space **104** through which a cooling liquid can be circulated, thereby ensuring that the barrier fluid space **104** is evenly cooled by the cooling liquid. Inlet (CI) **110** and outlet (CO) **120** ports are provided for connection of the cooling coil **106** to the cooling liquid supply.

It should be noted that, unless otherwise required by context, the expression "barrier fluid space" is used herein generically to refer to any internal space within a seal that is to be cooled by a cooling medium, whether or not the barrier fluid space is actually filled with a barrier fluid.

As can be seen in Fig. 1B, the ends **112** of the stainless-steel tubing coil **106** are bent substantially at right angles, so that they protrude into the CI **110** and CO **120** ports. Seals **114** are provided between the protruding tube ends **112** and the seal housing **108.** This allows for direct connection between the coolant circulation system and the cooling coil **106,** for example by threading the ends of metal tube fittings into the inlet and outlet ports **110, 120** and over the protruding ends **112** of the stainless-steel tubing coil **106.**

During the seal's lifetime, it can be desirable to insert and/or remove the cooling coil at least once, and possibly many times. For example, if it is discovered, after installation of a seal that lacks a cooling coil **106,** that the seal is subject to overheating, it may be desirable to disassemble the seal and to install a cooling coil **106.** Similarly, if the cooling coil **106** within a seal should become clogged for any reason, it may be desirable to remove the cooling coil **106** from the seal so that it can be more easily cleaned or replaced.

Unfortunately, while the approaches of Fig. 1A and Fig. 1B can be effective for cooling a seal, it is problematic to install the cooling space **105** or cooling coil **106** into the seal, and to remove the cooling space **105** or cooling coil **106** from the seal. If a cooling space **105** is included, as in Fig. 1A, it is typically welded into place and cannot be easily added or removed after manufacture of the seal. If a cooling coil **106** is included, as in Fig. 1B, installation and removal of the cooling coil **106** is difficult largely due to the requirement of bending the ends **112** of the cooling coil **106** at the cooling inlet port **110** and the cooling outlet port **120,** as well as a requirement that the cooling coil **106** must be rotationally aligned within the seal. Typically, each time a cooling coil **106** is removed, it is necessary to use a special tool to press the ends **112** of the coil **106** toward the shaft **100,** so that they no longer protrude into the holes made within the seal housing **108** which allow the coil ends **112** to engage with fittings installed in the CI **110** and CO **120** ports, thereby enabling the entire assembly to be axially removed from the seal. Similarly, when installing a cooling coil, it is necessary to use a special tool to capture and press the ends **112** of the cooling coil **106** away from the shaft **100,** so that they project into the CI **110** and CO **120** ports far enough to connect with the threaded ends of the metal tube fittings installed in in the CI **110** and CO **120** ports.

This requirement in Fig. 1B of manipulating the ends **112** of the cooling coil **106** each time it is installed or removed from the seal greatly increases the difficulty of the installation and removal procedures. Also, the requirement to rotationally align the cooling coil **106** with the seal makes the installation process even more complex. In addition, the process of installing and/or uninstalling the protruding ends **112** of the cooling coil **106** can cause deformation of the shape of the cooling coil **106** near its ends **112.** In the worst case, this can lead to direct contact between the cooling coil **106** and underlying, rotating components **122** of the seal, thereby causing the seal to fail.

Document GB1301309A discloses devices for sealing and cooling drive shafts . Document WO2018/123617A1 discloses a mechanical seal. Document FR2607874A1 discloses an output shaft device for a water pump under high pressure and temperature, particularly for a feed pump of a steam-powered electric power station. Document US3459430A discloses a mechanical seal assembly.

What is needed, therefore, is a rotating shaft seal that includes an internal cooling space or cooling channel through which a cooling liquid can be circulated, thereby providing cooling of an internal volume of the seal, referred to generically herein as the "barrier fluid space," wherein the cooling space or channel can be easily installed in and removed from the seal as needed without deformation of the cooling space or channel, wherein the cooling space or channel is easily cleaned when removed from the seal, and preferably wherein no special rotational alignment of the cooling space or channel is required within the seal.

### SUMMARY OF THE INVENTION

The present invention is a rotating shaft seal assembly that includes an internal cooling space or cooling channel through which a cooling liquid can be circulated, thereby providing cooling of an internal volume of the seal, referred to generically herein as the "barrier fluid space." The cooling space or channel is formed within the seal assembly by a cooling spool that can be easily installed in and removed from the seal assembly as needed, without deformation of the cooling spool. Furthermore, the cooling spool is easily cleaned when it is removed from the seal assembly. In embodiments, the cooling spool does not require any rotational alignment within the seal assembly.

Instead of implementing a permanently installed cooling space or a coil of tubing within a barrier fluid space, the cooling space or channel of the present invention is formed between the cooling spool and the surrounding housing of the seal, and is bounded by spool walls that extend radially outward from a cooling core of the cooling spool.

Spool seals between the cooling spool and the surrounding seal assembly housing are provided at both ends of the cooling spool, with the cooling space or channel being located therebetween. As a result, any small amount of leakage of cooling liquid that may occur over the end walls and/or channel walls is contained between the spool seals, and thereby prevented from leaking beyond the cooling spool.

A cooling inlet and a cooling outlet are formed in the seal assembly housing that enable connection of a cooling liquid circulating system to the cooling space or channel. However, no part of the cooling space or channel extends into the coolant inlet or outlet. Instead, the cooling inlet and outlet simply terminate in openings through the housing which allow a cooling liquid to enter and exit the cooling space or channel through the cooling inlet and outlet. Because the outward facing side of the cooling space or channel is open, and because the ends of the cooling spool are sealed to the housing, there is no need for any special connection or seal between the cooling space or channel and the cooling inlet or outlet.

As a result, no distortion or modification of the cooling spool is required during installation of the cooling channel spool into the seal assembly and/or removal thereof from the seal assembly. Accordingly, there is no danger of contact between the rigid cooling channel spool and any rotating components within the seal assembly.

In embodiments that form a cooling space within the seal, the cooling spool is a cooling space spool that includes only a pair of end walls proximate each end of the cooling spool, while the remainder of the cooling spool between the spool walls does not extend beyond the cooling core of the spool. When the cooling space spool is removed from the seal, the space between the end walls is open, such that the cooling space can be easily inspected and cleaned.

In embodiments that form a cooling channel within the seal, the cooling spool is a cooling channel spool from which a single channel wall extends outward from the cooling core of the cooling channel spool and surrounds the spool in a spiral pattern, such that a spiral cooling channel is formed between the channel wall and the surrounding housing. Because the channel wall appears in cross section to be a plurality of walls, the channel wall is sometimes referred to herein in the plural.

In some of these embodiments, the cooling channel has a substantially square or rectangular cross-section. The cooling channel, when not installed in the seal assembly, is actually a trough that is formed on the cooling channel spool, in that it is open on an outwardly facing side thereof. However, the channel walls are configured such that when the cooling channel spool is installed within the seal assembly, the channel walls extend radially outward into close proximity with a surrounding housing of the seal assembly, thereby limiting any leakage of cooling liquid over the channel walls.

In some cooling channel embodiments, the cooling channel is terminated on the cooling channel spool by an inlet ring at one end and an outlet ring at the other end. Accordingly, during installation of the cooling channel spool in the seal assembly it is only necessary to axially align the inlet and outlet rings with the cooling inlet and outlet. No rotational alignment of the cooling channel spool is needed. This approach further simplifies the installation process.

In various embodiments, only small and relatively inexpensive adaptations of the seal assembly are required so as to render it compatible with the disclosed cooling spool. As such, the adapted seal assembly can be produced in larger quantities and marketed with pre-installed cooling spools to customers who anticipate a need to cool the seal assembly, while marketing the same seal assembly without cooling spools to customers who do not anticipate overheating of the seal assembly, knowing that the disclosed cooling spool can be subsequently installed in any of those seal assemblies that unexpectedly experience overheating. In some embodiments, it is also possible to remove a cooling space spool and replace it with a cooling channel spool, or vice versa, for example if a need for more uniform cooling or a need for a higher volume of cooling fluid flow is discovered after installation of the seal.

In some embodiments, the barrier fluid space into which the cooling channel spool is inserted is configured to contain a pressurized barrier fluid so as to prevent any escape of the process fluid into the environment. When inserted into the seal assembly, the cooling spool is in thermal, but not fluid, communication with the barrier fluid through the body of the cooling spool. In similar embodiments, the "barrier fluid space" is not configured to contain a barrier fluid, but is nevertheless cooled by a cooling medium flowing through the cooling space or cooling channel.

Advantages of the present invention in various embodiments include:
- no welding is required to fabricate, install, or seal the cooling channel spool within the seal assembly, thereby reducing manufacturing costs;
- the cooling channel spool may be added to a seal assembly by the customer at a future date without any modifications to the existing seal assembly;
- the cooling channel spool can be removed and installed without any special tools;
- if it is determined after installation of a seal assembly having the disclosed cooling space spool or cooling channel spool installed therein that cooling of the seal assembly is not needed, the cooling space or channel spool can be either left in place and its ports simply plugged, or it can be removed from the seal assembly, and then the seal assembly replaced into service, knowing that if conditions change and the cooling space or channel spool is once again needed, it can be re-installed and returned to service;
- the present invention requires only simple CI and CO connections that terminate in through-holes that penetrate the main housing, without requiring that the CI and CO include any seals
- because the cooling spool is rigid and is not distorted during insertion and removal from the seal assembly, the internal tolerances of the seal assembly can be controlled more tightly, and any danger that the cooling spool might come into contact with rotating elements of the seal assembly is eliminated.
- in embodiments that implement a cooling channel spool, the amount of time during which a cooling fluid is in contact with the metal body of the cooling channel spool is uniform for nearly all of the cooling fluid;
- in embodiments that implement a cooling channel spool having a substantially square cross-section, the rate of thermal exchange between the cooling channel and the cooling channel spool is optimized;

It will be clear to one of skill in the art that the present invention can be adapted to almost any type of rotating shaft seal assembly, including labyrinth seals, contacting face seals, and end face mechanical seals, and that the invention can be adapted to single seal assemblies, as well as to dual seal assemblies, triple seal assemblies, etc.

The present invention is a cooled rotating shaft seal assembly as defined in the appended claims configured to prevent leakage of a process fluid through a housing along a rotating shaft. The rotating shaft seal assembly includes a first seal contained within a seal housing, the first seal being configured to inhibit leakage of the process fluid along the rotating shaft beyond the seal housing The first seal further includes an internal space, referred to herein as a barrier fluid space within the seal housing that is in thermal communication with the first seal, a cooling inlet and a cooling outlet formed in the seal housing and providing access through the seal housing to the cooling space without extending into the cooling space, and a cooling spool configured for removable insertion into the barrier fluid space of the rotating shaft seal. The cooling spool includes channel walls that extend radially outward from a substantially cylindrical cooling core of the cooling spool and terminate in outward facing ends thereof, the channel walls forming a cooling trough that surrounds the cooling core, the channel walls being configured such that when the cooling spool is installed within the barrier fluid space, the cooling core surrounds the rotating shaft without contacting the rotating shaft, and the channel walls extend radially outward from the cooling core into close proximity with the surrounding seal housing, thereby limiting any leakage of cooling liquid over the channel walls, and converting the cooling trough into a cooling passage that is suitable for circulation therethrough of a temperature modifying liquid, referred to herein as a cooling liquid, so as to decrease or increase a temperature of the first seal, inlet and outlet ends of the cooling passage being in liquid communication respectively with the cooling inlet and cooling outlet when the cooling spool is installed in the barrier fluid space, so that the cooling liquid can be circulated from the cooling inlet through the cooling passage to the cooling outlet, and first and second spool seals located proximal to opposing ends of the cooling spool, the cooling passage being located therebetween, wherein the first and second spool seals are configured to form seals between the ends of the cooling spool and the surrounding seal housing, thereby preventing any escape of the cooling liquid from the cooling spool.

The cooling passage is a spiral cooling channel that surrounds the cooling core. In some of these embodiments, a cross sectional shape of the cooling channel is substantially rectangular or square. In any of these embodiments, the inlet and outlet ends of the cooling channel can terminate in inlet and outlet channel rings, such that liquid access to the cooling channel through the cooling inlet and outlet requires axial alignment of the inlet and outlet channel rings with the cooling inlet and cooling outlet, but does not require rotational alignment of the cooling channel spool with the cooling inlet and outlet.

Any of the above embodiments further includes a second seal configured to inhibit leakage of the process fluid along the rotating shaft beyond the seal housing, the second seal being in thermal communication with the barrier fluid space, the barrier fluid space extending between the first and second seals. In some of these embodiments, the barrier fluid space is configured to contain a pressurized buffer fluid that prevents leakage of process fluid into the buffer fluid space.

In any of the above embodiments, the first seal can be a packing seal, a labyrinth seal, a contacting end face seal, or an end face mechanical seal.

And in any of the above embodiments, at least one of the spool seals can comprise an O-ring installed in a seal trough provided on the cooling spool.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1A is a cross-sectional illustration, drawn to scale, of a prior art seal assembly that includes a cooling space;
Fig. 1B is a cross-sectional illustration, drawn to scale, of a prior art seal assembly that includes a stainless-steel tubing cooling coil;
Fig. 2A is a cross-sectional illustration, drawn to scale, of an embodiment that does not form part of the present invention having a cooling space spool installed therein;
Fig. 2B is a cross-sectional illustration, drawn to scale, of an embodiment of the present invention having a cooling channel spool installed therein;
Fig. 2C is a cross-sectional illustration, drawn to scale, of the embodiment of Fig. 2B shown with the cooling channel spool removed therefrom;
Fig. 3 is a cutaway perspective view of the embodiment of Fig. 2B; and
Fig. 4 is a perspective view of the cooling channel spool of Fig. 2B shown separated from the seal assembly.

### DETAILED DESCRIPTION

The present invention is a rotating shaft seal assembly that includes an internal cooling space or channel through which a cooling liquid can be circulated, thereby cooling an internal volume of the seal, referred to generically herein as the "barrier fluid space." The cooling space or channel is formed by a cooling spool that can be easily installed in and removed from the seal assembly as needed, without deformation of the cooling spool. Furthermore, the cooling space or channel is easily cleaned when the cooling spool is removed from the seal assembly. In embodiments, the cooling spool does not require any rotational alignment within the seal assembly.

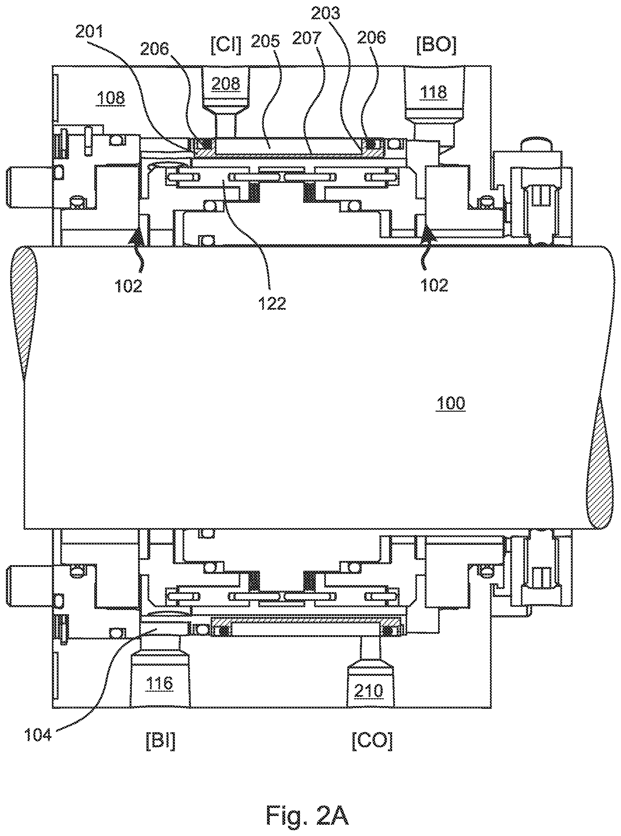

With reference to Fig. 2A, in embodiments a cooling space **205** similar to the cooling space **105** of Fig. 1A is formed within the seal by a cooling space spool **201** that is inserted within a barrier fluid space **104.** A cooling medium can flow into the cooling space **205** through port CI **208** and out from the cooling space through port CO **210.** In the illustrated embodiment, the cooling spool **201** is a cooling space spool **201** that includes only a pair of end walls **203** proximate to each end of the cooling space spool **201,** while the remainder of the cooling space spool **201** between the spool walls **203** does not extend beyond the cooling core **207** of the cooling space spool **201.** When the cooling space spool **201** is removed from the seal, the space between the end walls **203** is exposed, such that the cooling space **205** can be easily inspected and cleaned.

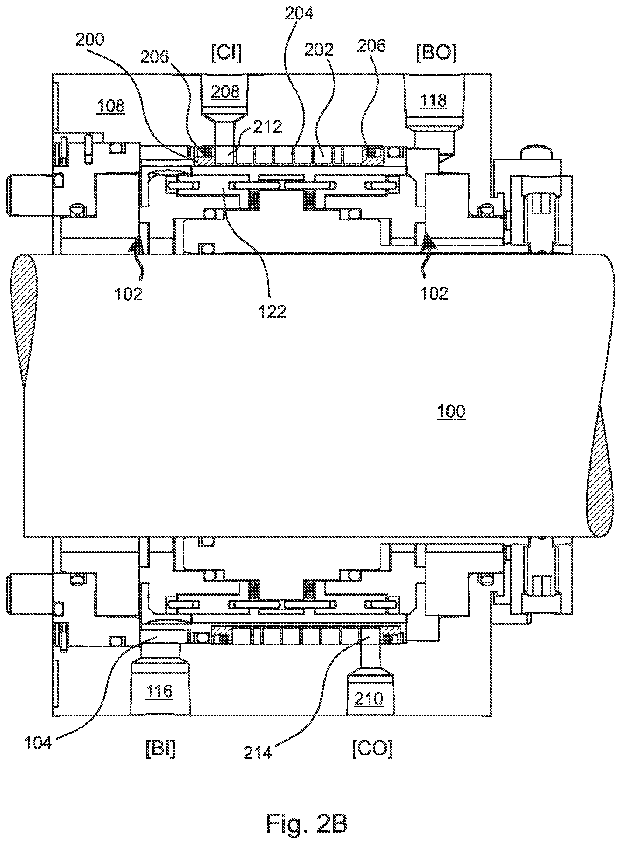

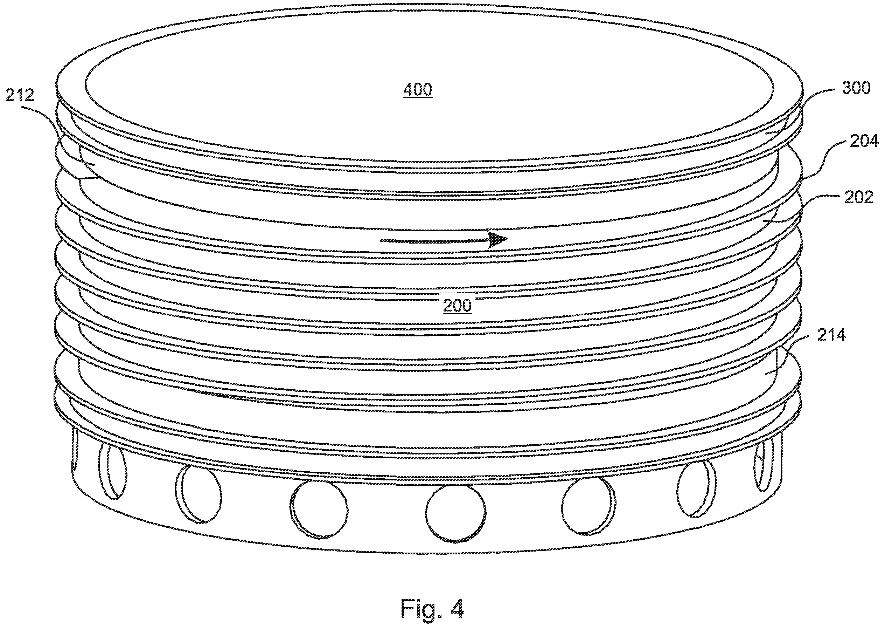

With reference to Fig. 2B, instead of implementing a coil of tubing 106 within a barrier fluid space **104,** as in Fig. 1B, the cooling spool **200** is a cooling channel spool **200** that combines with the surrounding housing **108** to form a cooling channel **202** that spirally surrounds the cooling channel spool **200** and is bounded by channel walls **204** that extend radially outward from a cooling core (**400** in Fig. 4) of the cooling channel spool **200.** It should be noted that, due to the spiral shape of the cooling channel **202,** the "channel walls" **204** can be considered to be a single, spiral wall that repeatedly encircles the cooling channel spool **200.**

In the embodiments of Fig's 2A and 2B, the barrier fluid space **104** is configured to contain a barrier fluid that is pressurized so as to prevent any escape of the process fluid into the environment. In other embodiments, the "barrier fluid space" is not configured to contain a barrier fluid, but is nevertheless cooled by the cooling channel.

In Fig. 2B, the cooling channel **202** has a substantially square cross-section, thereby increasing the total area of thermal contact between the cooling liquid and the channel **202,** so that cooling efficiency is maximized. In Figs. 2A and 2B, the cooling space spool **201** and cooling channel spool **200,** including the end walls **203** and channel walls **204,** are cross-hatched so that they can be more easily differentiated from the cooling space **205** and cooling channel **202,** and from the surrounding housing **108.**

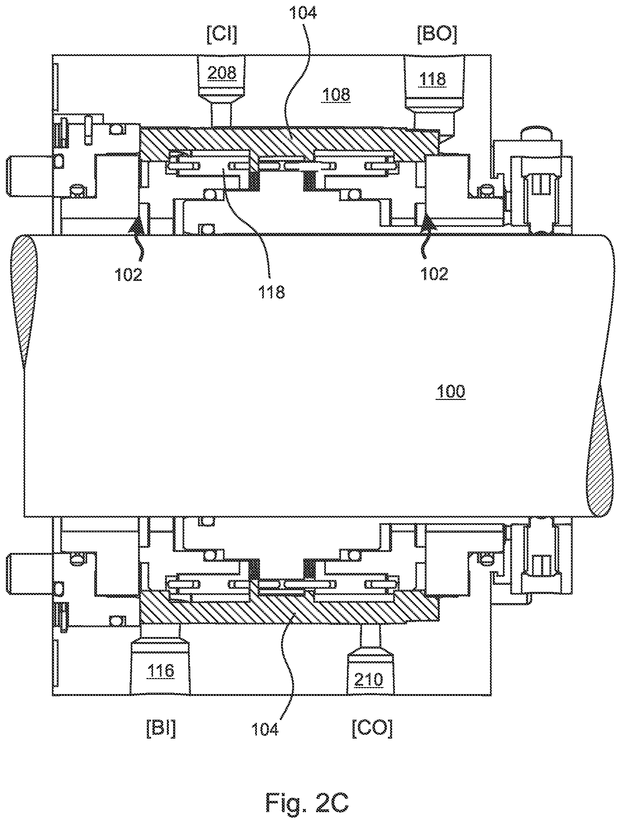

Fig. 2C is a sectional view of the seal assembly of Fig. 2B shown with the cooling channel spool **200** removed. The cross-sectional area of the barrier fluid space **104** is cross-hatched in the drawing, thereby obscuring structure within the barrier fluid space **104** that is behind the cross-section plane, and rendering it easier to distinguish between the barrier fluid space **104** and the solid structures that bound it.

For both the cooling space spool **201** of Fig. 2A and the cooling channel spool **200** of Figs. 2B and 2C, the only significant change as a result of removing the cooling space spool **201** or cooling channel spool **200** is that the buffer fluid space **104** is made larger. But it is clear that the seal assembly can be readily implemented without the cooling space spool **201** or cooling channel spool **200** simply by plugging the cooling inlet **208** and cooling outlet **210.** Furthermore, it can be seen that the only added cost of the seal assembly, as compared to an otherwise identical seal assembly that does not accept a cooling space spool **201** or cooling channel spool **200,** is the provision of the cooling inlet **208** and outlet **210** fittings, which are simple in design and add very little to the manufacturing cost.

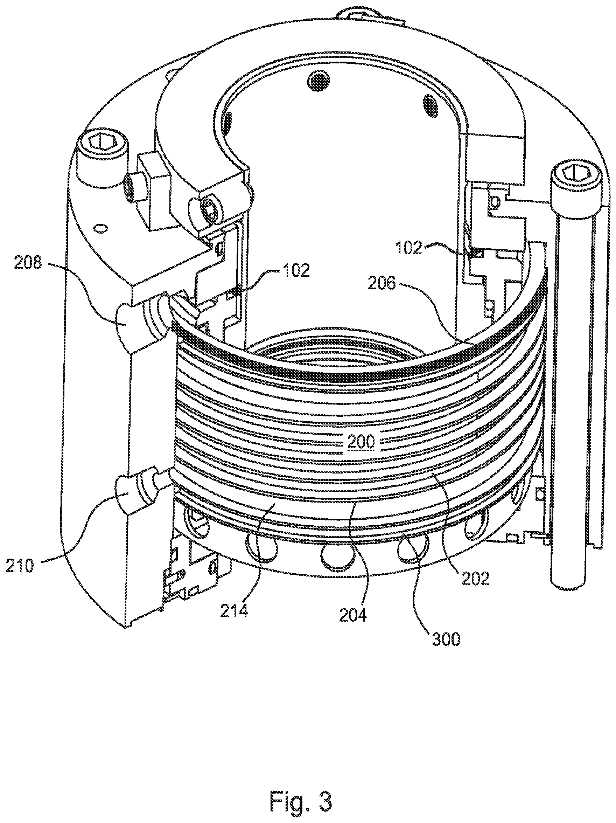

Fig. 3 is a cut-away perspective view of the seal assembly of Fig. 2B shown with 1/4 of the seal assembly housing removed in cross-section so that the internal structure can be seen.

Fig. 4 is a perspective view of the cooling channel spool **200** of Fig. 2B shown removed from the seal assembly. The substantially cylindrical cooling core **400** of the cooling channel spool **200** can easily be seen in Fig. 4. It can also be seen in Fig. 4 that, when the cooling channel spool **200** is not installed in the seal assembly, the cooling channel **202** is open on an outwardly facing side thereof and is configured as a spiral trough. This feature renders the cooling channel spool **200** easy to clean when it is removed from the seal. But as can be seen in Fig. 2B, the channel walls **204** are configured such that when the cooling channel spool **200** is installed within the seal assembly, the channel walls **204** extend radially outward into close proximity with a surrounding housing **108** of the seal assembly, thereby limiting any leakage of cooling liquid over the channel walls **204.**

With reference again to Fig2 2A through. 2C, spool seals **206** between the cooling space spool **201** or channel spool **200** and the surrounding seal assembly housing **108** are provided at both ends of the cooling space spool **201** or channel spool **200,** with the cooling space **205** or cooling channel **202** being located therebetween. As a result, any small amount of leakage of cooling liquid that may occur over the end walls **203** or channel walls **204** is contained between the spool seals **206,** and thereby prevented from leaking beyond the cooling space spool **201** or cooling channel spool **200.** In Fig. 3, the spool seals **206** are O-rings that are installed in seal troughs **300** provided in the cooling channel spool outside of the cooling channel **202,** so that the cooling channel **202** is located entirely between the two spool seals **206.** In the figure, the lower O-ring **206** has been removed so that the underlying seal channel **300** can be seen.

With reference again to Figs. 2A through 2C, a coolant inlet **208** and a cooling outlet **210,** which are configured in the illustrated embodiments as coolant inlet and outlet fittings **208, 210,** are provided on the seal assembly housing **108** that enable connection of a cooling liquid circulating system to the cooling channel **202.** However, no part of the cooling space **205** or cooling channel **202** extends into these coolant fittings **208, 210.** Instead, the coolant fittings **208, 210** simply terminate in openings through the housing **108** which allow a cooling liquid to enter and exit the cooling space **205** or cooling channel **202** through the coolant fittings **208, 210.** Because the outward facing side of the cooling space **205** or cooling channel **202** is open, as can be seen in Fig. 4, and because the ends of the cooling space spool **201** or cooling channel spool **200** are sealed **206** to the housing, there is no need for any special connection or seal between the cooling space **205** or cooling channel **202** and the coolant fittings **208, 210.**

As a result, no distortion or modification of the cooling space spool **201** or cooling channel spool **200** is required during installation of the cooling space spool **201** or cooling channel spool **200** into the seal assembly and/or removal thereof from the seal assembly. Accordingly, there is no danger of contact between the rigid cooling space spool **201** or cooling channel spool **200** and any rotating components **122** within the seal assembly.

It can be seen in Fig. 2A that no rotational alignment of the cooling space spool **201** relative to the inlet **208** and outlet **210** fittings is needed. In the embodiment of Fig's. 2B through 4, the cooling channel **202** is terminated on the cooling channel spool **200** by an inlet ring **212** at one end and an outlet **214** ring at the other end. As can be seen in Fig. 4, The inlet **212** and outlet **214** "rings" are actually annular troughs into which the two ends of the cooling channel **202** terminate. In the illustrated embodiment, the cooling rings **212, 214** are somewhat wider than the cooling channel **202.** Accordingly, during installation of the cooling channel spool **200** into the seal assembly it is only necessary to axially align the inlet **212** and outlet **214** rings with the coolant inlet **208** and outlet **210** fittings. No rotational alignment of the cooling channel spool **200** is needed. This approach further simplifies the installation process.

In various embodiments, only small and relatively inexpensive adaptations of the seal assembly are required so as to render it compatible with the disclosed cooling space spool **201** or cooling channel spool **200.** As such, the adapted seal assembly can be produced in larger quantities and marketed with pre-installed cooling space spools **201** and/or cooling channel spools **200** to customers who anticipate a need to cool the seal assembly, while marketing the same seal assemblies without cooling space spools **201** or cooling channel spools **200** to customers who do not anticipate overheating of the seal assembly, knowing that the disclosed cooling channel spool can be subsequently installed in any of those seal assemblies that unexpectedly experience overheating.

While the present disclosure is presented in terms of "cooling" a seal assembly, it will be understood that, in fact, the present invention is equally applicable to heating of seal assemblies that are intended to seal a process fluid where an elevated fluid temperature is desired, the only adaptation being that the spool seals **206** and any other seals must be made from materials that can withstand the elevated temperature of the process fluid. As such, the "cooling space" and "cooling channel" that are disclosed herein are, in general, "heating or cooling" spaces and channels.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

Although the present application is shown in a limited number of forms, the scope of the invention is not limited to just these forms, but is amenable to various changes and modifications. The disclosure presented herein does not explicitly disclose all possible combinations of features that fall within the scope of the invention. The features disclosed herein for the various embodiments can generally be interchanged and combined into any combinations that are not self-contradictory without departing from the scope of the invention. In particular, the limitations presented in dependent claims below can be combined with their corresponding independent claims in any number and in any order without departing from the scope of this disclosure, unless the dependent claims are logically incompatible with each other. The scope of the invention is thus determined by the appended claims only.

## Claims

1. A cooled rotating shaft seal assembly configured to prevent leakage of a process fluid through a housing along a rotating shaft (100), the rotating shaft seal assembly comprising:
a first seal (102) contained within a seal housing (108), the first seal being configured to inhibit leakage of the process fluid along the rotating shaft beyond the seal housing;
a second seal (102) contained within the seal housing and configured to inhibit leakage of the process fluid along the rotating shaft (100) beyond the seal housing;
an internal space, referred to herein as a barrier fluid space (104), extending within the seal housing (108) between the first and second seals in thermal communication with the first and second seals;
a cooling inlet (208) and a cooling outlet (210) formed in the seal housing and providing access through the seal housing to the barrier fluid space (104) without extending into the barrier fluid space; and
a cooling spool (200, 201) configured for insertion into and removal from the barrier fluid space, the cooling spool comprising:
a substantially cylindrical cooling core (207) configured to surround the rotating shaft (100) without contacting the rotating shaft when the cooling spool is installed;
spiral channel walls (204) extending radially outward from the cooling core (207) into close proximity with the surrounding seal housing, thereby limiting any leakage of cooling liquid over the channel walls (204), and that terminate in outward facing ends thereof, and defining a cooling passage that surrounds the cooling core (207) and is configured for circulation therethrough of a temperature-modifying liquid, referred to herein as a cooling liquid, so as to change temperatures of the first and second seals (102);
inlet and outlet ends of the cooling passage configured to be in liquid communication respectively with the cooling inlet and cooling outlet when the cooling spool (200, 201) is installed in the barrier fluid space, so that the cooling liquid can be circulated through the cooling passage to the cooling outlet; and
first and second spool seals (206) located proximal to opposing ends of the cooling spool (200, 201) and configured to form seals between the ends of the cooling spool and the surrounding seal housing (108) at axially spaced locations, thereby preventing any escape of the cooling fluid from the cooling spool, the cooling passage being located between the first and second spool seals (206);
wherein when the cooling channel spool (200) is not installed in the seal assembly, the cooling channel (202) is open on an outwardly facing side thereof and is configured as a spiral trough, and wherein the cooling spool is rigid and is installed and removed without distortion and without contact between the cooling spool and rotating components of the seal assembly.

2. The rotating shaft seal assembly of claim 1, wherein a cross sectional shape of the cooling channel (202) is substantially rectangular or square.

3. The rotating shaft seal assembly of claim 1 or 2, wherein the inlet and outlet ends of the cooling channel (202) terminate in inlet and outlet channel rings, such that liquid access to the cooling channel through the cooling inlet and outlet requires axial alignment of the inlet and outlet channel rings with the cooling inlet and cooling outlet, but does not require rotational alignment of the cooling spool (200,201) with the cooling inlet and outlet.

4. The rotating shaft seal assembly of claim 1, wherein the barrier fluid space (104) is configured to contain a pressurized buffer fluid that prevents leakage of process fluid into the barrier fluid space.

5. The rotating shaft seal assembly of any preceding claim, wherein the first seal (102) is a packing seal.

6. The rotating shaft seal assembly of any of claims 1-4, wherein the first seal (102) is a labyrinth seal.

7. The rotating shaft seal assembly of any of claims 1-4, wherein the first seal (102) is a contacting end face seal.

8. The rotating shaft seal assembly of any of claims 1-4, wherein the first seal (102) is an end face mechanical seal.

9. The rotating shaft seal assembly of any preceding claim, wherein at least one of the spool seals (206) comprises an O-ring installed in a seal trough (300) provided on the cooling spool (200, 201).

## Patentansprüche

1. Gekühlte Drehwellendichtungsanordnung, die dafür ausgelegt ist, die Leckage eines Prozessfluids durch ein Gehäuse entlang einer Drehwelle (100) zu verhindern, wobei die Drehwellendichtungsanordnung umfasst:
eine erste Dichtung (102), die innerhalb eines Dichtungsgehäuses (108) enthalten ist, wobei die erste Dichtung dafür ausgelegt ist, die Leckage des Prozessfluids entlang der Drehwelle über das Dichtungsgehäuse hinaus zu verhindern;
eine zweite Dichtung (102), die innerhalb des Dichtungsgehäuses enthalten ist und dafür ausgelegt ist, die Leckage des Prozessfluids entlang der Drehwelle (100) über das Dichtungsgehäuse hinaus zu verhindern;
einen Innenraum, der hier als Sperrfluidraum (104) bezeichnet ist, der sich innerhalb des Dichtungsgehäuses (108) zwischen der ersten und der zweiten Dichtung in thermischer Kommunikation mit der ersten und der zweiten Dichtung erstreckt;
einen Kühlungseinlass (208) und einen Kühlungsauslass (210), die im Dichtungsgehäuse ausgebildet sind und Zugang durch das Dichtungsgehäuse zum Sperrfluidraum (104) bieten, ohne sich in den Sperrfluidraum hinein zu erstrecken; und
eine Kühlungsspule (200, 201), die für die Einführung in den und die Abnahme von dem Sperrfluidraum ausgelegt ist, wobei die Kühlungsspule umfasst:
einen im Wesentlichen zylindrischen Kühlungskern (207), der dafür ausgelegt ist, die Drehwelle (100) zu umgeben, ohne die Drehwelle zu berühren, wenn die Kühlungsspule installiert ist;
spiralförmige Kanalwände (204), die sich radial nach außen von dem Kühlungskern (207) in unmittelbare Nähe mit dem umgebenden Dichtungsgehäuse erstrecken, wodurch jede Leckage von Kühlflüssigkeit über die Kanalwände (204) begrenzt wird, und die in nach außen gerichteten Enden davon enden, und die einen Kühlungsdurchgang definieren, der den Kühlungskern (207) umgibt und für die Zirkulation dadurch einer Temperatur-ändernden Flüssigkeit, die hier als Kühlflüssigkeit bezeichnet ist, ausgelegt ist, um die Temperaturen der ersten und der zweiten Dichtung (102) zu ändern;
Einlass- und Auslassenden des Kühlungsdurchgangs, die dafür ausgelegt sind, in Flüssigkeitskommunikation jeweils mit dem Kühlungseinlass und dem Kühlungsauslass zu stehen, wenn die Kühlungsspule (200, 201) im Sperrfluidraum installiert ist, so dass die Kühlflüssigkeit durch den Kühlungsdurchgang zum Kühlungsauslass zirkuliert werden kann; und
erste und zweite Spulendichtungen (206), die proximal zu entgegengesetzten Enden der Kühlungsspule (200, 201) gelegen sind und dafür ausgelegt sind, Dichtungen zwischen den Enden der Kühlungsspule und dem umgebenden Dichtungsgehäuse (108) an axial beabstandeten Stellen zu bilden, wodurch jeder Austritt der Kühlflüssigkeit aus der Kühlungsspule verhindert wird, wobei der Kühlungsdurchgang zwischen den ersten und den zweiten Spulendichtungen (206) gelegen ist;
worin, wenn die Kühlungskanalspule (200) in der Dichtungsanordnung nicht installiert ist, der Kühlungskanal (202) an einer nach außen gerichteten Seite davon offen ist und als ein spiralförmiger Trog ausgebildet ist, und worin die Kühlungsspule starr ist und ohne Verzerrung und ohne Kontakt zwischen der Kühlungsspule und drehenden Komponenten der Dichtungsanordnung installiert und entfernt ist.

2. Drehwellendichtungsanordnung nach Anspruch 1, worin eine Querschnittsform des Kühlungskanals (202) im Wesentlichen rechteckig oder quadratisch ist.

3. Drehwellendichtungsanordnung nach Anspruch 1 oder 2, worin die Einlass- und Auslassenden des Kühlungskanals (202) in Einlass- und Auslasskanalringen enden, so dass Flüssigkeitszugang zum Kühlungskanal durch den Kühlungseinlass und -auslass eine axiale Ausrichtung der Einlass- und Auslasskanalringe zum Kühlungseinlass und Kühlungsauslass erfordert, aber keine Drehausrichtung der Kühlungsspule (200, 201) zum Kühlungseinlass und -auslass erfordert.

4. Drehwellendichtungsanordnung nach Anspruch 1, worin der Sperrfluidraum (104) dafür ausgelegt ist, ein Druck-Pufferfluid zu enthalten, das die Leakage des Prozessfluids in den Sperrfluidraum verhindert.

5. Drehwellendichtungsanordnung nach einem der vorhergehenden Ansprüche, worin die erste Dichtung (102) eine Packungsdichtung ist.

6. Drehwellendichtungsanordnung nach einem der Ansprüche 1-4, worin die erste Dichtung (102) eine Labyrinthdichtung ist.

7. Drehwellendichtungsanordnung nach einem der Ansprüche 1-4, worin die erste Dichtung (102) eine berührende Endflächendichtung ist.

8. Drehwellendichtungsanordnung nach einem der Ansprüche 1-4, worin die erste Dichtung (102) eine mechanische Endflächendichtung ist.

9. Drehwellendichtungsanordnung nach einem der vorhergehenden Ansprüche, worin zumindest eine von den Spulendichtungen (206) einen O-Ring umfasst, der in einem Dichtungstrog (300) installiert ist, der an der Kühlungsspule (200, 201) vorgesehen ist.

## Revendications

1. Ensemble d'étanchéité refroidi pour arbre rotatif, configuré pour empêcher la fuite d'un fluide de procédé à travers un boîtier le long d'un arbre rotatif (100), l'ensemble d'étanchéité pour arbre rotatif comprenant :
un premier joint (102) contenu dans un boîtier d'étanchéité (108), le premier joint étant configuré pour inhiber la fuite du fluide de procédé le long de l'arbre rotatif au-delà du boîtier d'étanchéité ;
un second joint (102) contenu dans le boîtier d'étanchéité et configuré pour inhiber la fuite du fluide de procédé le long de l'arbre rotatif (100) au-delà du boîtier d'étanchéité ;
un espace interne, désigné ici par espace de fluide de barrage (104), s'étendant à l'intérieur du boîtier d'étanchéité (108) entre les premier et second joints en communication thermique avec les premier et second joints ;
une entrée de refroidissement (208) et une sortie de refroidissement (210) formées dans le boîtier d'étanchéité et ménageant un accès à travers le boîtier d'étanchéité à l'espace de fluide de barrage (104) sans s'étendre dans l'espace de fluide de barrage ; et
un manchon de refroidissement (200, 201) configuré pour être inséré dans l'espace de fluide de barrage et en être retiré, le manchon de refroidissement comprenant :
un noyau de refroidissement (207) sensiblement cylindrique configuré pour entourer l'arbre rotatif (100) sans être en contact avec l'arbre rotatif lorsque le manchon de refroidissement est installé ;
des parois de canal en spirale (204) s'étendant radialement vers l'extérieur depuis le noyau de refroidissement (207) jusqu'à proximité immédiate du boîtier d'étanchéité environnant, limitant ainsi toute fuite de liquide de refroidissement par-dessus les parois de canal (204), et qui se terminent par des extrémités de celles-ci orientées vers l'extérieur, et définissant un passage de refroidissement qui entoure le noyau de refroidissement (207) et est configuré pour la circulation à travers celui-ci d'un liquide de modification de température, désigné ici par liquide de refroidissement, de manière à modifier les températures des premier et second joints (102) ;
des extrémités d'entrée et de sortie du passage de refroidissement configurées pour être en communication liquide respectivement avec l'entrée de refroidissement et la sortie de refroidissement lorsque le manchon de refroidissement (200, 201) est installé dans l'espace de fluide de barrage, de sorte que le liquide de refroidissement puisse être mis en circulation à travers le passage de refroidissement jusqu'à la sortie de refroidissement ; et
des premier et second joints de manchon (206) situés à proximité d'extrémités opposées du manchon de refroidissement (200, 201) et configurés pour former des joints entre les extrémités du manchon de refroidissement et le boîtier d'étanchéité environnant (108) à des emplacements espacés axialement, empêchant ainsi tout échappement du fluide de refroidissement hors du manchon de refroidissement, le passage de refroidissement étant situé entre les premier et second joints de manchon (206) ;
dans lequel, lorsque le manchon à canal de refroidissement (200) n'est pas installé dans l'ensemble d'étanchéité, le canal de refroidissement (202) est ouvert sur un côté de celui-ci orienté vers l'extérieur et est configuré sous la forme d'une gorge en spirale, et dans lequel le manchon de refroidissement est rigide et est installé et retiré sans déformation et sans contact entre le manchon de refroidissement et des composants rotatifs de l'ensemble d'étanchéité.

2. Ensemble d'étanchéité pour arbre rotatif selon la revendication 1, dans lequel une forme en section transversale du canal de refroidissement (202) est sensiblement rectangulaire ou carrée.

3. Ensemble d'étanchéité pour arbre rotatif selon la revendication 1 ou 2, dans lequel les extrémités d'entrée et de sortie du canal de refroidissement (202) se terminent par des anneaux de canal d'entrée et de sortie, de sorte que l'accès du liquide au canal de refroidissement à travers l'entrée et la sortie de refroidissement nécessite un alignement axial des anneaux de canal d'entrée et de sortie avec l'entrée de refroidissement et la sortie de refroidissement, mais ne nécessite pas d'alignement en rotation du manchon de refroidissement (200, 201) avec l'entrée et la sortie de refroidissement.

4. Ensemble d'étanchéité pour arbre rotatif selon la revendication 1, dans lequel l'espace de fluide de barrage (104) est configuré pour contenir un fluide tampon sous pression qui empêche la fuite de fluide de procédé dans l'espace de fluide de barrage.

5. Ensemble d'étanchéité pour arbre rotatif selon l'une quelconque des revendications précédentes, dans lequel le premier joint (102) est un joint presse-étoupe.

6. Ensemble d'étanchéité pour arbre rotatif selon l'une quelconque des revendications 1 à 4, dans lequel le premier joint (102) est un joint à labyrinthe.

7. Ensemble d'étanchéité pour arbre rotatif selon l'une quelconque des revendications 1 à 4, dans lequel le premier joint (102) est un joint à faces frontales en contact.

8. Ensemble d'étanchéité pour arbre rotatif selon l'une quelconque des revendications 1 à 4, dans lequel le premier joint (102) est une garniture mécanique à faces frontales.

9. Ensemble d'étanchéité pour arbre rotatif selon l'une quelconque des revendications précédentes, dans lequel au moins l'un des joints de manchon (206) comprend un joint torique installé dans une gorge de joint (300) prévue sur le manchon de refroidissement (200, 201).
